**Europäisches Patentamt**

**European Patent Office**

**Office européen des brevets**

(19)

(11) Veröffentlichungsnummer: **0 000 734**
**B2**

(12) ## NEUE EUROPÄISCHE PATENTSCHRIFT

(45) Veröffentlichungstag der neuen Patentschrift:
17.04.85

(51) Int. Cl.⁴: **B 29 C 67/14,** B 29 C 63/24,
F 16 L 9/16

(21) Anmeldenummer: **78100512.9**

(22) Anmeldetag: **26.07.78**

(54) Verfahren zur Herstellung von Stäben oder Rohren konstanten Profils aus Faserverbundwerkstoffen.

(30) Priorität: 06.08.77 DE 2735538

(43) Veröffentlichungstag der Anmeldung:
21.02.79 Patentblatt 79/4

(45) Bekanntmachung des Hinweises auf die Patenterteilung:
23.07.80 Patentblatt 80/15

(45) Bekanntmachung des Hinweises auf die Entscheidung
über den Einspruch:
17.04.85 Patentblatt 85/16

(84) Benannte Vertragsstaaten:
**CH DE FR GB**

(56) Entgegenhaltungen:
**DE - A - 1 504 197
DE - A - 1 907 355
DE - A - 1 928 269
FR - A - 1 124 516
FR - A - 1 214 712
FR - A - 1 378 299
FR - A - 2 224 296
US - A - 2 602 766
US - A - 2 694 661
US - A - 2 723 705
US - A - 2 749 643
US - A - 2 751 237**

(73) Patentinhaber: **BAYER AG, Konzernverwaltung RP
Patentabteilung, D-5090 Leverkusen 1 Bayerwerk (DE)**

(72) Erfinder: **Preis, Lothar, Dr., Wolfskaul 7,
D-5000 Köln 80 (DE)**
Erfinder: **Förster, Rolf-Joachim, Wolfskaul 12,
D-5000 Köln 80 (DE)**

EP 0 000 734 B2

## Beschreibung

Zur kontinuierlichen Herstellung von Profilen aus Faser-Verbundwerkstoffen sind eine Reihe von Verfahren bekannt. Allen diesen Verfahren ist gemeinsam, daß Halbzeuge aus organischen, anorganischen oder metallischen Fasern in der Form von Fatsersträngen, Fasermatten oder Geweben von einem Vorratsgestell abgezogen, mit flüssigem Reaktionsharz imprägniert und in einer Härtungsstrecke bei gleichzeitiger Formgebung in Düsenwerkzeugen zu Profilen ausgehärtet werden.

Im einzelnen unterscheiden sich die Verfahren durch die Art der Imprägnierung, die Formgebung und die Härtung. Für die Formgebung sind Düsenkonstruktionen aus hochwertigen Werkzeugstählen üblich, die mit Dampf, Öl oder elektrisch beheizt werden und deren Gleitflächen zur Verringerung von Reibung und Verschleiß vielfache vergütete Oberflächenschichten, z. B. Hartverchromungen, aufweisen. Mit derartigen formgebenden Werkzeugen können verhältnismäßig schwierige Profile gefertigt werden. Es hat sich in der Praxis gezeigt, daß der Einsatz derartig komplexer Werkzeuge eine sehr genaue Abstimmung aller Systemkomponenten erfordert. Eine Reihe von Reaktionsharzen kann z. B. wegen ihrer Reaktivität oder aber aufgrund der Reibungsverhältnisse trotz der Verwendung von Trennmitteln bei den zur exakten Formgebung erforderlichen großen Düsenlängen nicht eingesetzt werden.

Die hohen, in den Düsen auftretenden Reibungskräfte begrenzen den Fasergehalt der Faser-Verbundwerkstoffe, sie stören die Faserorientierung und bedingen hohe Abzugskräfte. Die Verringerung der Reibung z. B. durch den Einsatz von Teflonwerkzeugen bringt neben den Vorteilen geringer Reibung und der Möglichkeit einer Mikrowellenaushärtung der Reaktionsharze jedoch gravierende Nachteile durch Formenstandzeiten, die sehr gering gegenüber denen der Stahlwerkzeuge sind.

Um die aufgezählten Nachteile beim Einsatz von Stahlwerkzeugen zumindest bei einfachen kreisförmigen oder elliptischen Querschnitten zu vermindern, ist auch vorgeschlagen worden, das imprägnierte Fasermaterial mit Trennfolie zu umwickeln. Dadurch wird eine Härtung ohne weitere Formgebung in einer nachfolgenden einfachen Härtungsstrecke möglich. Nachteilig bei diesem Verfahren sind die Kosten und der Aufwand für das Auf- und Abwickeln der im allgemeinen nicht mehrfach verwendbaren Trennfolien und die nicht einwandfreien Oberflächen, die häufig eine Nacharbeit erfordern.

Die Umwicklung der imprägnierten Stränge mit Glasfaserprodukten ermöglicht ebenfalls die Herstellung einfacher Profile ohne zusätzliche Formgebung. Nachteilig bei diesen Verfahren sind die schlechten Oberflächen der Profile sowie das Auftreten von Härtungsrissen selbst bei relativ kleinen Querschnitten.

Gemäß der DE-OS 1 504 107 ist ein Verfahren zur Herstellung von Stäben, Profilen und Rohren aus Faser-Verbundwerkstoffen bekannt, bei dem Fasern von einem Zettelbaum 1, Fig. 1, kontinuierlich durch Führungsbleche 2 zusammengefaßt werden. Die Fasern werden dann in eine heizbare und mit Kunstharz gefüllte Tränkwanne 4 eingeführt und anschließend durch Düsen geformt. Nach der Imprägnierung und Formgebung wird schraubenförmiges Fasermaterial mit Hilfe einer Wickelvorrichtung 7 auf das getränkte Fasermaterial gewickelt. Danach läuft das Material in ein dielektrisches Feld 9 zum Härteofen 10. Auf Seite 6, Zeilen 9 bis 11, wird beschrieben, daß durch besondere Spannvorrichtungen die Fäden so gebremst werden, daß sie mit einem bestimmten Zug auf das getränkte Fasermaterial aufgebracht werden.

Demgegenüber liegt der Erfindung die Aufgabe zugrunde, das konstante Profil ohne Formgebungseinheit zu erzeugen.

Die Lösung besteht darin, daß die imprägnierten Stränge zur Profilgebung ohne Formgebungseinheit unmittelbar nach der Imprägnierung oder im Bereich einer Vorhärtungsstrecke mit schrumpffähigen Fasern oder Monofilen aus Polyamiden, thermoplastischen Polyestern, Polycarbonaten, Polyacrylnitril, Modacryl, Polyolefinen, Polyvinylchlorid, Polytetrafluorethylen, Polyvinylalkohol oder Polyurethan umwickelt oder umflochten werden, deren Schrumpfkräfte beim nachfolgenden Vorhärtungs- oder Härtungsprozeß freiwerden.

## II. Beschreibung des Verfahrens

Bei dem beanspruchten Verfahren werden Faserwerkstoffe in üblicher Weise, z. B. in einem Tränkbad mit einem flüssigen Reaktionsharz imprägniert, wobei der Harzgehalt durch Düsen, Rollen o. ä. Vorrichtungen, die dem Stand der Technik entsprechen, eingestellt wird.

Die nach Tränkung erfolgende erfindungsgemäße Umwicklung des imprägnierten Fasermaterials mit den dazu geeigneten Faserwerkstoffen kann unmittelbar nach dem Austritt der Faserstränge aus dem Tränkbad durchgeführt werden. In manchen Fällen ist es auch vorteilhaft, die Umwicklung erst nach einem Vorhärtungsprozeß — stets aber in der flüssigen Phase des Reaktionsharzes — vorzunehmen.

Die eigentliche Härtung erfolgt auf übliche Weise z. B. durch konvektive Wärmeübertragung, Wärmestahlung oder durch Mikroweller in einem Heizkanal.

Für die Umwicklung der getränkten bzw. imprägnierten Faserwerkstoffe mit den verstreckten oder vororientierten oder texturierten organischen Fasern entsprechend der Erfindung eignen sich übliche Wickelmaschinen, z. B. Diagonalwickelmaschinen, wie sie zur Herstellung verstärkter Schläuche, oder Maschinen, die zur Herstellung von Isolationen im Wickel- oder im Flechtverfahren verwendet werden. Ebenso sind Maschinen zur Umwicklung von Drähten (z. B. Gitarrensaiten) geeignet.

Das Umwickeln des getränkten Fasermaterials kann in der Form von Umfangswicklungen mit geringer Steigung vorgenommen werden. Ebenso sind Schraubenwicklungen mit in weiten Grenzen einstellbaren Steigungen möglich. Eine weitere Art der Umwicklung besteht im Aufbringen von Diagonal(Kreuz)-Wicklungen. Es eignen sich ebenso auch übliche Flechtverfahren zum Aufbringen der organischen Fasern auf die getränkten Faserstränge.

Bei der Ausführung von Schraubenwicklungen, Kreuzwicklungen oder Umflechtungen ist je nach gewünschten Eigenschaften (Effekten) die Bedeckung der imprägnierten Faserwerkstoffe mit den verstreckten oder vororientierten oder texturierten organischen Fasern in weiten Grenzen bis zur mehrfachen Überdeckung möglich.

Wesentliches Merkmal des erfindungsgemäßen Verfahrens ist, daß durch die Umwicklung mit verstreckten oder vororientierten oder texturierten organischen Fasern im Gegensatz zur Umwicklung mit anorganischen Fasern Profile mit exakten Kreisquerschnitten ohne Verwendung einer Formgebungseinheit, z. B. einer formgebenden Düse, erzeugt werden können.

Andere geometrisch einfache und exakte Querschnittsformen — z. B. Ellipsen — lassen sich durch Umwickeln von getränkten Faserwerkstoffen mit organischen Fasern erzeugen, wenn der aus dem Tränkbad austretende Strang z. B. einen annähernd rechteckigen Querschnitt aufweist.

Neben der Möglichkeit, Profile mit geometrisch einwandfreiem Querschnitt ohne formgebende Düsen zu erzeugen, können die imprägnierten Stränge auf einer Innenform mit den Fasern oder Monofilen umwickelt und ohne weitere Außenform zu geschlossene Hohlprofilen gehärtet werden.

Eine weitere Möglichkeit der Profilherstellung besteht darin, daß durch die Umwicklung eines flachen getränkten Stranges aus Fasermaterial mit verstreckten und/oder vororientierten oder texturierten organischen Fasern in einfacher Weise Flachprofile oder Winkelprofile nur durch den Einsatz einer Rollenkalibrierung hergestellt werden können.

Durch das Fehlen formgebender Düsen ist besonders vorteilhaft eine Mikrowellenhärtung möglich, da die getränkten Faserstränge über relativ lange Strecken die Strahlung ungeschwächt absorbieren können.

Besonders interessante Möglichkeiten ergeben sich dadurch, daß zur Umwicklung der getränkten Faserwerkstoffe neben verstreckten und/oder vororientierten oder texturierten organischen Fasern auch anorganische Fasern als zusätzliche Verstärkungen aufgebracht werden können.

Der mit der Umwicklung der getränkten Faserwerkstoffe mit verstreckten und/oder vororientierten oder texturierten organischen Fasern oder Monofilen erreichte Effekt der Formgebung beruht neben einem gleichmäßigen Aufbringen der Wicklung insbesondere darauf, daß beim Vorhärtungs- oder beim Härtungsprozeß Schrumpfkräfte frei werden, die durch Anteil, Art, Streckgrad und/oder Vororientierung und/oder Texturierung und die geometrische Anordnung der organischen Fasern bestimmt werden. Die organischen Fasern werden so ausgewählt, daß die Schrumpfkräfte noch vor dem Erreichen der Gelphase des verwendeten Reaktionsharzes wirksam werden. Die auftretenden Schrumpfkräfte hängen außer von der Art des verwendeten Fasermaterials ab vom Anteil (Überdeckung) und vom Streckgrad und/oder der Vororientierung sowie von der geometrischen Anordnung der organischen Fasern auf dem zu umwickelnden Profil.

Für die zuvor genannten Beispiele der Formgebung hat sich gezeigt, daß bereits eine relativ geringe Überdeckung von etwa 12% ausreichend ist, um die beschriebenen Effekte zu erzeugen.

Gleichzeitig wird durch die Schrumpfkräfte stets eine harzreiche Profiloberfläche erzeugt. Bei entsprechender Auswahl an Art, Menge und Anordnung des organischen Fasermaterials erhält man Profile mit einer sie völlig umschließenden Reinharzschicht, die bei anderen Fertigungsverfahren nur durch einen zusätzlichen Fertigungsschritt erreicht werden kann.

Einer der Vorteile eines derartigen in einem Verfahrensschritt erzeugten Harzmantels ist die verbesserte Handhabung ohne störende Verstärkungsfasern an der Profiloberfläche. Daraus resultiert weiterhin eine wesentlich verbesserte Witterungsbeständigkeit, die üblicherweise nur durch eine zusätzliche Beschichtung mit den ihr innewohnenden Haftungsproblemen zu erreichen ist.

Die Schrumpfkräfte der organischen Fasern lassen sich zudem gezielt auch zum Erreichen hoher Fasergehalte bei nahezu idealer Längsorientierung der Verstärkungsfasern und zu luftblasenfreien Profilen nutzen, die eine weitgehend homogene Faserverteilung aufweisen. Daraus ergeben sich wesentliche Erhöhungen in Modul und Festigkeiten des Profils mit deutlich verbesserter Reproduzierbarkeit dieser Werte. Bei Verfahren mit äußerer Formgebung sind derartige Fasergehalte und Festigkeiten sowie Orientierungen wegen der auftretenden Reibungskräfte nicht zu erreichen.

Durch die Umwicklung getränkter Faserwerkstoffe mit organischen Fasern wird bei vorwiegend unidirektional verstärkten Profilen die Festigkeit quer zur Längsrichtung des Profils (Querfestigkeit) besonders deutlich verbessert. Ebenso wird durch die Umwicklung mit organischen Fasern die Kerbempfindlichkeit der auf diese Weise hergestellten Profile erheblich herabgesetzt.

Gezielte und im allgemeinen erhebliche Verbesserungen der Biege- und Torsionssteifigkeit beliebiger symmetrischer Profile lassen sich durch das Umwickeln von getränkten Faserwerkstoffen in der Weise erreichen, daß sowohl geeignete organische Fasern als auch vornehmlich anorganische Fasern zur Umwicklung verwendet werden. Auf diese Weise läßt sich der Vorteil der Imprägnierung der zusätzlich aufgebrachten Fasern ohne weiteres Tränkbad allein durch den auftretenden Schrumpfeffekt der organischen Fasern mit dem Vorteil des Steifigkeitsgewinnes verknüpfen. Das Umwickeln mit beiden Faserarten kann in getrennten Verfahrensschritten, besonders vorteilhaft aber gleichzeitig erfolgen.

Das erfindungsgemäße Verfahren ermöglicht es auch, mehrere Einzelstränge mit verschiedenen Imprägnierharzen zu tränken, durch das Umwickeln zusammenzufassen und zu einem einheitlichen Faser-Verbundwerkstoff auszuhärten. Ein einheitlicher Faser-Verbundwerkstoff wird dabei dadurch erhalten, daß die bei der Härtung frei werdenden Schrumpfkräfte die einzelnen Faserstränge zu einem Profil mit homogener Faserverteilung, aber unterschiedlichen Matrixwerkstoffen verbinden.

Der durch die Schrumpfkräfte der verstreckten oder vororientierten und/oder texturierten organischen Fasern an der Profiloberfläche erzeugte Harzüberschuß kann wie bereits beschrieben zur vollständigen Imprägnierung weiterer Faserwerkstoffe dienen. Damit lassen sich beispielsweise auch dekorative Profile durch die Verwendung unterschiedlich eingefärbter Faserwerkstoffe ebenso erzeugen wie profilierte Oberflächen.

Darüber hinaus kann über Art, Anteil, Streckgrad und geometrische Orientierung der organischen Fasern der Harzüberschuß so eingestellt werden, daß zusätzlich aufgebrachte Faserwerkstoffe nur teilweise imprägniert werden.

Beim zusätzlichen Umwickeln der Profile mit organischen Fasern ergeben sich durch die an der Profiloberfläche liegenden nicht oder nur unvollständig imprägnierten Fasern einfache Möglichkeiten, eine verbesserte Verbundhaftung z. B. beim Einbetten der Profile in Thermoplaste zu erreichen. Hierzu wird das Wickelmaterial möglichst artgleich zum verwendeten Thermoplasten gewählt.

Beim zusätzlichen Umwickeln der Profile mit anorganischen Fasern, z. B. Glasfasern, ergeben sich durch die beschriebenen Effekte besonders günstige Verhältnisse beim Einleiten von Zugkräften z. B. in Krafteinleitungselemente durch die vergrößerte Profiloberfläche, die sowohl mit einer Profilierung als auch mit unvollständig getränkten Fasern erhalten wird.

## III. Werkstoffe

Das beanspruchte Verfahren eignet sich für Faser-Verbundwerkstoffe aus Glasfasern, organischen Fasern, Kohlenstoff-Fasern und Metallfasern. Die Fasern können z. B. in der Form von Fasersträngen wie Garnen, Filamentgarnen, Zwirnen, Rovings und Spinnfäden usw. oder als textiles Gewebe und/oder als Fasermatten vorliegen.

Geeignete Matrixwerkstoffe sind z. B. Reaktionsharze wie ungesättigte Polyesterharze, Epoxidharze, Methacrylatharze, Polyurethanharze, Novolakharze, Polybismaleinimide oder auch Cyanatharze, deren Wärmetönung beim Härtungsprozeß, oder deren Härtungstemperaturen Werte überschreiten, bei denen die verwendeten organischen Fasern schrumpfen.

Als Werkstoffe zum Umwicklung der getränkten Faserwerkstoffe eignen sich verstreckte und/oder vororientierte und/oder texturierte organische Fasern oder Monofile aus Polyamiden, thermoplastischen Polyestern, Polycarbonaten, Polyacrylnitril, Modacryl, Polyolefinen, Polyvinylchlorid, Polytetrafluoräthylen, Cellulose und regenerierter Cellulose, Celluloseestern oder Polyvinylalkohol sowie Polyurethanfasern.

Die Schrumpftemperatur der organischen Fasern hängt ab vom Ausgangspolymer und von den Bedingungen bei der Faserherstellung und Verstreckung bzw. Texturierung. Die Auswahl einer geeigneten organischen Faser muß nach den Härtungsbedingungen des eingesetzten Matrixwerkstoffes erfolgen, wie bereits geschrieben.

Profile, die nach dem erfindungsgemäßen Verfahren hergestellt werden, eignen sich mit ihrer homogenen Faseranordnung, den hohen Fasergehalten und ihrer Freiheit von Hohlräumen und ähnlichen Störstellen sowie mit ihren harzreichen oder ihren Reinharzoberflächen aufgrund ihrer Festigkeiten für die Armierung von Beton als Spanndrähte oder Spannseile, wobei vorteilhaft die verbesserten Möglichkeiten zur Krafteinleitung, die verringerte Kerbempfindlichkeit und die erhöhte Querfestigkeit vorwiegend unidirektional verstärkter Profile zum Tragen kommen. Von besonderem Vorteil beim Einsatz im Freien ist die hohe Witterungsbeständigkeit der Profile durch ihre Reinharzoberfläche.

Hohe Festigkeiten und damit verbundene günstige elektrische Eigenschaften erlauben den Einsatz der nach dem erfindungsgemäßen Verfahren hergestellten Profile auch im Elektrosektor z. B. als Festigkeitsträger in Isolatoren oder für Fahrdrahtabspannungen und im Elektromaschinenbau.

## Beispiel 1

Beim Herstellen eines Rundstabes aus Glasrovings und Polyesterharz, der nur am Ende des Tränkbades durch eine einwandfreie runde Ausgangsdüse von 10 mm ∅ zur Einstellung des Harzgehaltes gezogen wurde und der anschließend ohne jede weitere Formgebung in einem elektrisch beheizten Rohrofen ausgehärtet wurde, war festzustellen, daß der Stab unregelmäßig geformt war und eine rauhe Oberfläche mit teilweise freiliegenden Glasfasern aufwies. Die Abweichungen von der idealen Kreisform betrugen bis zu 10%. Der Glasgehalt dieses Stabes betrug 76,4 Gew.-%.

## Beispiel 2

Auf die gleiche Weise imprägnierte Glasfaserstränge, die nach dem Verlassen der Ausgangsdüse des Tränkbades von 10 mm $\varnothing$ und einer Länge von 5 mm mit Perlon-Filamentgarn, bestehend aus 140 Einzelfilamenten mit einem Gesamttiter von 940 dtex und einem Streckverhältnis von 1 : 3,2 in einer Schraubenwicklung bis zu einer Überdeckung von ca. 20% in einer Wickellage umwickelt wurden, ergaben nach der Härtung mit Temperaturen zwischen 140 und 180°C Rundprofile ohne Längs- und Querrisse mit weniger als 1% Abweichung von der Kreisform. Der Glasgehalt des Stabes nach dem Abschleifen der organischen Faser betrug 81,5 Gew.-%. Die Oberfläche des so hergestellten Stabes ist glatt und hochglänzend. Die Dicke der Reinharzschicht der Oberfläche beträgt ca. 100 µm.

## Beispiel 3

Ähnlich wie im Beispiel 1 wurden Glasfaserstränge mit Polyesterharz imprägniert und nach dem Verlassen des Tränkbades mit einer Ausgangsdüse von 10 mm $\varnothing$ umwickelt mit E-Glas-Spinnfäden von 3100 dtex und Polyester-(PETP)Filamentgarn, bestehend aus 34 Einzelfilamenten, einem Gesamttiter von 167 dtex und einem (Ver-)streckungsverhältnis von 1 : 4 zu jeweils gleichen Anteilen. Die Bedeckung wurde durch Schraubenwicklungen mit einer Steigung von 15° zu 100% in einer Lage gewählt. Nach der Härtung bei Temperaturen zwischen 160 und 195°C wurde ein einwandfreies Rundprofil ohne Längsrisse erhalten. Zur Prüfung der Kerbempfindlichkeit und der Belastbarkeit senkrecht zur Profilachse sowie der Zugfestigkeit der Profile wurden einmal an ca. 15 mm langen Profilabschnitten Kerbversuche mit dem Stempel einer üblichen Biegeprüfmaschine (Spitzenradius 1 mm) und Druckversuche zwischen ebenen Platten durchgeführt, wobei die Profilachse senkrecht zur Kraftrichtung angeordnet war. Gegenüber dem nicht umwickelten Vergleichstab ergaben sich bei den Kerbversuchen um ca. 35% höhere Bruchlasten. Beim Druckversuch zwischen ebenen Platten wurden gegenüber dem Vergleichsstab im Durchschnitt 15% höhere Werte erreicht. Zugversuche in Anlehnung an DIN 53 455 zeigten gegenüber einem Vergleichsstab mit ca. 1350 MPas ca. 10% höhere Festigkeiten bei gleichem Querschnitt aufgrund der fehlstellenfreien Oberfläche und der gleichmäßigen Faserverteilung über dem Stabquerschnitt bei dem umwickelten Rundprofil. Die bekanntermaßen schwierige Einspannung bei der Prüfung von Faser-Verbundwerkstoffen mit derartig hohen Festigkeiten wurde hier dadurch umgangen, daß die Rundstäbe in Vorrichtungen aus einem Kunstharzmörtel eingegossen wurden. Dabei stellte sich heraus, daß für die nichtumwickelten Stäbe wesentlich höhere Vergußlängen gewählt werden mußten, um einen Trennbruch der Glasfasern zu erreichen.

## Beispiel 4

In der Art von Beispiel 1 wurden Kohlenstoff-Faserstränge in einem Harzbad getränkt und der Fasergehalt in einer Rechteckdüse mit einem Querschnitt von 20 x 2 mm eingestellt. Nach dem Austritt des Faserbündels aus der Düse wurde Faserstrang mit einer Kreuzwicklung unter ± 75° zur Stablängsachse mit Perlongarn bestehend aus 18 Einzelfilamenten und einem Gesamttiter von 67 dtex Streckverhältnis 1 : 2,8 mit einer Überdeckung von etwa 30% umwickelt und nach einer Vorhärtungsstrecke durch drei Rollenpaare kalibriert, wobei das Profil beidseitig mit siliconisiertem Papier abgedeckt war, und anschließend gehärtet. Dabei wurde ein Profil mit glatter Oberfläche und abgerundeten Kanten erhalten. Es wird über der Länge Dickenschwankungen von 2% auf, die Profiloberflächen waren parallel zueinander. Das Profil war vollständig frei von Längsrissen.

## Beispiel 5

In ähnlicher Weise wie im ersten Beispiel wurden Glasrovings in einem Tränkbad getränkt und die getränkten Rovings in einer Mehrfachdüse bei ringförmiger Anordnung auf dem gewünschten Harzgehalt eingestellt. Nach dem Verlassen der Ausgangsdüse wurden die Faserstränge über einen zylindrischen Schleppkern als Innenform geführt und im Bereich einer Vorhärtungsstrecke noch auf dem Schleppkern mit Perlon-Monofilen 0,20 mm $\varnothing$ ($\hat{=}$ 400 dtex) bei einem Streckverhältnis von 1 : 4 durch Schraubenwicklungen bei einer Überdeckung von etwa 40% umwickelt. In der nachfolgenden Härtungsstrecke (Rohrofen) wurden die Profile bei Temperaturen zwischen 140 und 160°C ausgehärtet. Durch dieses Verfahren erhält man ohne weitere Außenform nur mit dem Schleppkern Hohlprofile, die einen geometrisch einwandfreien Innendurchmesser mit Wandstärkeschwankungen von ± 0,1 mm bei einer Wandstärke von 2 mm aufweisen. Die Oberfläche der Profile war in Längsrichtung wellig.

## Patentansprüche

1. Verfahren zur Herstellung von Stäben oder Rohren konstanten Profils aus Faserverbundwerkstoffen, wobei kontinuierlich mit flüssigen Reaktionsharzen imprägnierte Stränge aus Faserwerkstoffen sowohl mit Fasern oder Monofilen umwickelt oder umflochten als auch in einer Härtungsstrecke ausgehärtet werden, dadurch gekennzeichnet, daß die imprägnierten Stränge zur Profilgebung ohne Formgebungseinheit unmittelbar nach der Imprägnierung oder im Bereich einer Vorhärtungsstrecke mit schrumpffähigen Fasern oder Monofilen aus Polyamiden, thermoplastischen Polyestern, Polycarbonaten, Polyacrylnitril, Modacryl, Polyolefinen, Polyvinylchlorid, Polytetrafluorethylen, Polyvinylalkohol oder Polyurethan umwickelt oder umflochten werden, deren Schrumpfkräfte beim nachfolgenden Vorhärtungs- oder Härtungsprozeß frei werden.

2. Verfahren nach Anspruch 1, dadurch gekennzeichnet, daß die imprägnierten Stränge auf einer Innenform mit den Fasern oder Monofilen umwickelt und ohne weitere Außenform zu geschlossenen Hohlprofilen gehärtet werden.

## Claims

1. Process for the production of rods or tubes of a constant profile from composite fibrous materials, wherein strands of composite fibrous materials which are continuously impregnated with liquid reaction resins are not only wrapped or braided with fibres or monofils but also hardened in a hardening zone, characterised in that the impregnated strands, in order to be profiled, are wrapped or braided, without a forming unit and immediately after the impregnation or in the region of a pre-hardening zone, with shrinkable fibres or monofils of polyamides, thermoplastic polyesters, polycarbonates, polyacrylonitrile, modacrylic, polyolefins, polyvinyl chloride, polytetrafluoroethylene, polyvinyl alcohol or polyurethane, the shrinking forces of which are liberated in the subsequent prehardening of hardening process.

2. Process according to Claim 1, characterised in that the impregnated strands are wrapped with the fibres or monofils on an internal former and hardened to form closed hollow profiles without any additional external former.

## Revendications

1. Procédé pour la fabrication de tiges ou tubes de profil constant en matières composites fibreuses, dans lequel des écheveaux de produits fibreux imprégnés en continu par des résines réactives liquides sont enveloppés ou tressés avec des fibres ou monofilaments ainsi que totalement durcis dans un trajet de durcissement, caractérisé en ce que, pour le profilage sans unité de formage, les écheveaux imprégnés sont enveloppés ou tressés directement après l'imprégnation ou dans le domaine d'un trajet de prédurcissement, avec des fibres ou monofilaments rétrécissables en polyamides, polyesters, thermoplastiques, polycarbonates, polyacrylonitrile, »Modacryl«, polyoléfines, chlorure de polyvinyle, polytétrafluoroéthylène, alcool polyvinylique ou polyuréthanne dont les forces de contraction sont libérées dans le processus ultérieur de prédurcissement ou de durcissement.

2. Procédé selon la revendication 1, caractérisé en ce que les écheveaux imprégnés sont enroulés sur une forme interne avec les fibres ou monofilaments et durcis en profilés creux fermés sans autre forme externe.